# EUROPEAN PATENT SPECIFICATION

(11) **EP 2 039 135 B1**
(45) Date of publication and mention of the grant of the patent: **07.04.2010**
(21) Application number: 07703635.8
(22) Date of filing: 04.01.2007
(51) Int. Cl.: H04M 1/72, H04M 1/60

(54) **AUDIO PROCESSING IN COMMUNICATION TERMINALS**
AUDIOVERARBEITUNG IN KOMMUNIKATIONSENDGERÄTEN
TRAITEMENT AUDIO DANS DES TERMINAUX DE COMMUNICATION

(30) Priority: 06.07.2006 US 428850
(43) Date of publication of application: 25.03.2009
(73) Proprietor: Sony Ericsson Mobile Communications AB, 22188 Lund (SE)
(72) Inventor: HANSSON, Magnus, Waterloo Ontario N2V 2W1 (CA)
(74) Representative: Aurell, Henrik
(86) International application number: PCT/EP2007/050074
(87) International publication number: WO 2008/003525

(56) References cited:
- EP-A2- 0 611 070
- EP-A2- 0 865 188
- WO-A-00/42798

## Description

### Field of the invention

The present invention relates to communication terminals and methods for use in such communication terminals for adaptation of audio characteristics of audio signals to be presented to communication terminal users. More specifically, the invention relates to interactive procedures for adapting the audio characteristics of a built in or external speaker to a user's hearing performance or personal preference.

### Background

The first commercially attractive cellular telephones or terminals were introduced in the market at the end of the 1980's. Since then, the mobile phone industry has had an enormous development both regarding quality of service and transmission capabilities, as well as the technology for producing advanced communications terminals. A lot of effort has been made in making smaller terminals, with much help from the miniaturization of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. State of the art mobile phones are capable of receiving, saving and sending text messages, for instance in the form of SMS (Short Message Service) or e-mail. For more advance data segments, MMS (Multimedia Message Service) may be employed. MMS is an enhanced short message service for mobile phones that enables graphics, video clips and sound files to be transmitted.

However, many users still consider the most important function for mobile communication terminals to be the function of speech communication. As the terminals become smaller and more room inside the terminals is needed for electronics, constraints are placed on the built in speakers. For reasons of both compactness and cost, both ear speakers used for speech conversation and potentially other speakers used e.g. for playing ring signals, will in some sense have limited performance, and will be tuned for some sort of standard ear shape and hearing performance. However, particularly the speaker arranged in the terminal to be used for speech conversations will typically be used at different orientations to the user's ear, dependent on background noise and also the particular shape of the user in question. In addition, many users will experience reduced hearing by age, caused by exposure to high sound levels, or as a birth defect. A hearing impediment makes mobile phone usage more difficult since intelligibility goes down.

### Summary of the invention

A general object of the invention is therefore to provide a solution for adapting the audio characteristics of a radio communication terminal, in order to compensate for a hearing impediment or simply to meet personal user preferences.

According to a first aspect, this object is fulfilled by a radio communication terminal, comprising:
an audio signal output configured to provide sound to a user;
an audio adaptation unit configured to assign predetermined audio characteristics to an audio signal, connected to the audio signal output;
a user input interface connected to the audio adaptation unit, operable to set audio characteristics for subsequently provided audio signals.

In one embodiment the radio communication terminal comprises:
an audio signal generator configured to generate audio signals at different frequencies and amplitude levels.

In one embodiment the audio signal generator is configured to run an audiometric sequence through the audio output.

In one embodiment the user input interface is operable to input a command indicating that a user has heard an output audio signal.

In one embodiment the audio adaptation unit comprises a frequency-selective filter.

In one embodiment the frequency-selective filter comprises a plurality of channels for different audio frequencies, each channel having a filter coefficient configured to affect an audio signal amplitude for the respective frequency.

In one embodiment the radio communication terminal comprises:
a control unit configured to set the filter coefficients of the frequency-selective filter responsive to input on the user input interface.

In one embodiment the audio adaptation unit comprises a filter switch, selectively configurable to pass an audio signal to one or more of a plurality of filters, where each filter is configured to affect an audio signal amplitude according to a predetermined frequency profile.

In one embodiment the radio communication terminal comprises:
a control unit configured to set the filter switch responsive to input on the user input interface.

In one embodiment the audio adaptation unit comprises a filter configurable to filter an audio signal with different filtering curves over an audio frequency range, further comprising:
a memory for holding a plurality of different filtering curves, and
a control unit configured to control the filter to apply a selected one of said filtering curves from the memory as indicated by input on the user input interface.

In one embodiment the radio communication terminal comprises:
a media player connected to the audio output through the filter; and
an audio memory for holding an audio file connected to the media player.

In one embodiment the media player is connected to an audio input, and is also operable as a media recorder to record an audio signal as an audio file in the audio memory.

In one embodiment the radio communication terminal comprises:
a radio signal transceiver for remote receiving a radio signal, including a signal decoder configured to extract an audio signal from a received radio signal, connected to the audio signal output through the audio adaptation unit.

In one embodiment the audio signal output comprises a speaker.

In one embodiment the audio signal output comprises a connector for attachment of an external speaker.

In one embodiment the audio signal output comprises a short range wireless signal transmitter for communicative connection to an external speaker.

In one embodiment the user input interface comprises a keyboard, and wherein the audio adaptation unit is configured to interpret input of one of the keys of the keyboard as a confirmation signal that the provided sound has been perceived by the user.

According to a second aspect, the stated object is fulfilled by means of a method for adjusting audio characteristics of a radio communication terminal, comprising the steps of:
repeatedly passing audio signals with different audio characteristics through an audio signal output of the terminal to provide sound to a user;
detecting a user input responsive to the provided sound;
setting audio characteristics to be used for subsequently passed audio signals responsive to the user input.

In one embodiment the steps of repeatedly passing audio signals and detecting user input involves an audiometric sequence, the method including the steps of:
passing audio signals at different frequencies and amplitude levels;
monitoring, for each frequency and amplitude level, user input indicating that the user has perceived the provided sound;
comparing perceived amplitude levels with reference levels; and
selectively adjusting a frequency-selective filter for subsequently passed audio signals.

In one embodiment the terminal includes a frequency-selective filter with a plurality of channels for different audio frequencies having separate filter coefficients, and a memory for holding a plurality of different settings for the frequency-selective filter, wherein the step of repeatedly passing the audio signals with different audio characteristics includes
passing the audio signals through the filter configured according to the different settings; and wherein the step of setting audio characteristics to be used includes
subsequently using the setting indicated as preferred by means of the user input.

In one embodiment the method comprises the step of:
playing an audio file repeatedly by means of a media player connected to the audio output through the frequency-selective filter configured in accordance with the different settings.

In one embodiment the method comprises the step of:
creating the audio file to be played by recording an audio signal by means of a microphone.

In one embodiment the step of passing the audio signal to the audio signal output of the terminal to provide sound to a user comprises
passing the audio signal to a speaker of the terminal.

In one embodiment the step of passing the audio signal to the audio signal output of the terminal to provide sound to a user comprises
passing the audio signal to an external speaker connected to the terminal.

In one embodiment the step of passing the audio signal to the audio signal output of the terminal to provide sound to a user comprises
passing the audio signal to an external speaker by means of a short range wireless signal transmitter of the terminal.

### Brief description of the drawing

The features and advantages of the present invention will be more apparent from the following description of the preferred embodiments with reference to the accompanying drawings, on which
Fig. 1 schematically illustrates a system setup in which embodiments of the present inventive terminal and method are usable; and
Fig. 2 schematically illustrates functional blocks of a communication terminal embodiment of the present invention.

### Detailed description of preferred embodiments

The present description relates to the field of communication terminals. The term communication terminal, also denoted terminal in short in this disclosure, includes all mobile equipment devised for radio communication with a radio station, which radio station also may be mobile terminal or e.g. a stationary base station. Consequently, the term terminal includes mobile telephones, DECT terminals (Digital Enhanced Cordless Telephony), laptop computers with audio input and transmission capabilities, and any other type of radio communication terminal usable for communicating speech. Further, the present invention is equally applicable to stationary devices such as PSTN telephones and desktop computers with audio input and transmission capabilities. Furthermore, it should be emphasized that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

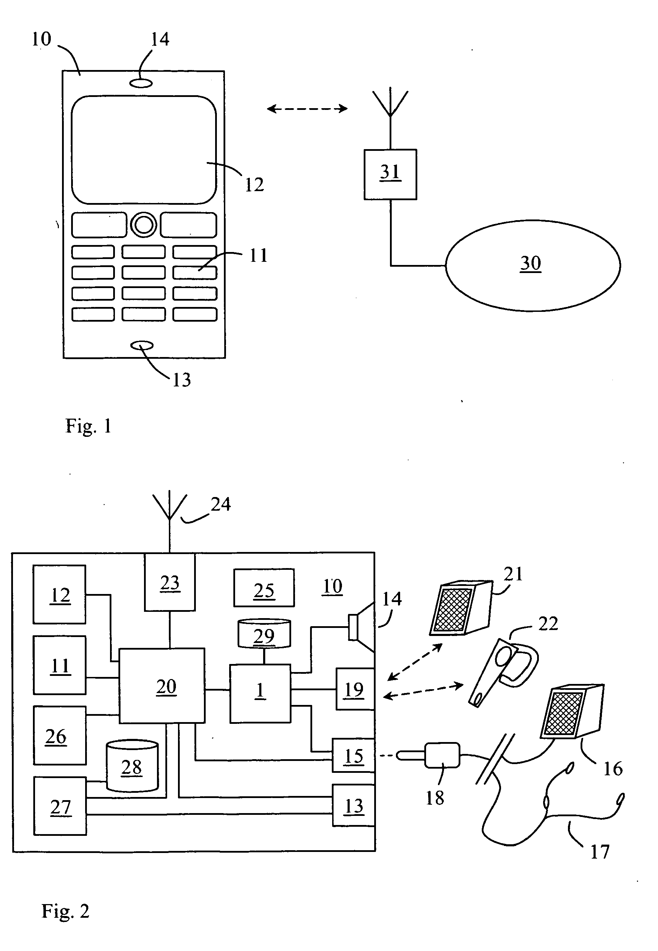

The invention will be described by means of an embodiment of a communication terminal in the form of a mobile phone, where Fig. 1 illustrates the outer appearance of a typical mobile phone for implementation of the invention, and Fig. 2 schematically illustrates functional features of the mobile phone by means of a block diagram. It should be noted that the elements indicated in Fig. 2 does not necessarily have to be physically divided in the manner shown, and that it is the functional relationship that is of primary interest. Furthermore, the outer appearance of the mobile phone need not take the indicated shape of Fig. 1, instead the mobile phone may e.g. be of a clamshell type, a jack knife type, or the like.

Figs 1 and 2 schematically illustrates a communication terminal 10 in the form of a digital cellular radio communication terminal, or mobile phone. Different embodiments, which may be employed separately or in combination in a terminal will be described with reference to Figs 1 and 2, and it should therefore be noted that not all of the elements indicated in Fig. 2 must be included in all embodiments.

Terminal 10 is configured to operate in a radio communications network 30, by radio communication with a base station 31, or by direct radio communication with another terminal as a walkie-talkie. A control unit 20 is indicated in Fig. 2, which represents a microprocessor system with associated memory space, operation software, and application software for handling internal processing such as signal processing, data encoding and decoding, and so on. The actual function of terminal 10 as a mobile phone is not crucial to the invention, and will therefore not be described in detail, except for those functions which are relevant to the invention.

The terminal 10 comprises a user interface including a keypad 11 for entering user input signals, and a display 12 for information output to a user. Alternative embodiments include a touch-sensitive screen 12, which may be used for both input and output, or even a voice control input mechanism. For input of audio signals, typically during speech communication with a remote party, terminal 10 further includes an audio input interface in the form of a microphone 13. The audio input interface may also include a connector 15 for connection to an external audio player or an external memory for storing audio data. The terminal further includes an audio signal output, preferably comprising a speaker 14. In different embodiments the audio signal output additionally or optionally comprises a socket 15 for connection of an external speaker 16 or headset 17 by means of a plug 18, wherein the socket 15 preferably is configured to also receive audio signals from the microphone of the headset 17 in the latter case. The audio signal output may also comprise a short range wireless transceiver unit 19, such as an IR or a Bluetooth interface, for wireless communication with a speaker 21 or headset 22. In ordinary use of terminal 10 for telephone communication purposes, a user will speak into microphone 13 or a microphone of headset 17 or 22 for entering audio signals, which audio signals are processed and encoded to a radio signal by means of control device 20 in the terminal. The radio signal is subsequently transmitted to a receiving party terminal by means of a radio transceiver unit 23 connected to an antenna 24. As a power supply, terminal 10 preferably further includes a battery 25.

In accordance with the invention, terminal 10 is configured to adapt and modify audio characteristics of an audio signal to be passed to a user through the audio signal output 14, 15 or 19. This way, it is possible for the user to adapt the sound quality of the terminal speaker 14 or accessory speaker 16, 17, 21, 22. The adaptation is preferably made to improve the sound quality for a user with a hearing impediment, i.e. reduced hearing. In general, a hearing impediment caused by ageing or by damage due to infections or trauma to the ear tends to affect certain frequency ranges more than others. The normal range of human hearing is about 20 Hz to 20 kHz, where low bass tones range around 50 to 60 Hz and shrill, high-pitched tones range around 10,000 Hz or higher. Deteriorated hearing due to ageing in particular, predominantly affects the higher frequency regions more than the lower regions.

In one embodiment the terminal 10 includes as application for audiometry (hearing threshold testing). The inability to hear pure tones below 25 dB typically indicates some extent of hearing loss, and in detailed audiometry hearing is generally considered normal if tones from 250 Hz through 8000 Hz can be heard at 25 dB or lower. One embodiment of the invention is realized as a real medical audiometry test where tones of different levels and frequencies are played back to determine the hearing threshold for different frequencies. This result can be used to monitor changes in your hearing over time, and to adapt the audio characteristics of the terminal to improve the perceived sound quality by filtering the output audio signal, typically by amplifying higher frequencies for age-related loss, or certain bands for noise-induced loss. The audiometry and compensation can be done and applied for all usable acoustic interfaces like speaker 14, headset 17 or 22, accessory speakers 26 or 22, car handsfree etc.

Referring again to Fig. 2, the terminal 10 comprises an audio adaptation unit 1 connected to the audio signal output, and configured to assign predetermined audio characteristics to an audio signal. Audio adaptation unit 1 preferably comprises a frequency-selective filter, including a plurality of channels for different audio frequencies, where each channel has a configurable filter coefficient determining to what extent an audio signal is to be affected when passing through the filter. Each channel may be configured to assign a certain gain to a signal portion of a frequency band, or a certain attenuation to a signal portion of a frequency band, as determined by the filter coefficient presently set. The audio signal is thereby separately processed for different frequency bands, by amplification or attenuation, so as to modify the audio signal amplitude for the respective frequency band dependent on the filter coefficients. The complex signal comprising the different frequency bands is then passed to the audio output, e.g. speaker 14. In an alternative embodiment, audio adaptation unit 1 comprises a switch configurable to selectively pass an audio signal through any one or more of a plurality of different filters, each of which have a different gain or attenuation profile over frequency. The different filters may be broadband or narrow band filters, which partly or completely overlap in terms of frequency.

There are different embodiments for controlling the audio adaptation unit 1 in accordance with the invention. One embodiment comprises an audio signal generator 26, configured to generate audio signals at different frequencies and amplitude levels, and to run an audiometric sequence through the audio output in question. In such an audiometric sequence, each one of a predetermined set of separate frequencies are investigated by emitting a tone of the frequency in question at different amplitudes, typically decreasing, and monitoring a response signal from the user. In an embodiment, pressing of one key of keyboard 11 is dedicated in an audiometry application to act as a confirmation signal that the presently emitted tone has been perceived by the user. Once input by the user has been detected in terminal 10, the amplitude is lowered a predetermined step, and this sequence is repeated until either a lowermost accepted level has been reached, or until no input response from the user has been detected in terminal 10. The corresponding sequence is then repeated for another one of the predetermined frequencies until the test has been completed. However, it is not essential that tones of the same frequencies are emitted with different amplitudes consecutively, tones of different frequencies and amplitudes may also be emitted in random order. The time period between emission of two consecutive tones preferably varies, though.

After a completed audiometric sequence, the results are compared with a reference result stored in a memory 28. That reference measurement is typically a set of standard levels for normal hearing, such as dB levels for the different frequencies. Another alternative is to compare the results obtained with a reference result in the form of a previously performed test with the same user, by means of which it is possible to follow up the hearing capabilities of the user. The comparison is preferably made for one frequency at a time, and if the lowest perceived level is higher than the reference level, the filter coefficient for that frequency is set to increase the gain for that channel, or decrease the attenuation thereof. The increase/decrease is preferably set dependent on the difference between the perceived level and the reference level, such that the more severe the hearing loss is in a certain frequency band, the more that band is amplified compared to the other bands. Control unit 20 is configured to set the filter coefficients responsive to the hearing levels indicated by input on the user input interface, and the setting of the audio output in question is preferably also saved in a memory 29. The frequency-selective filter 1 is thereby selectively adjusted for all subsequently passed audio signals, which are sent to the audio output through which the test was made. Memory 29 may thereby contain settings for different audio outputs, such as for speaker 14, headsets 17, 22, and external speakers 16, 21.

An alternative embodiment uses a simplified approach, which either can make use of an audio adaptation unit 1 in the form of a frequency selective filter or a filter switch according to the above. In this embodiment, predetermined typical filtering curves are stored in memory 29, which may selectively be used on an audio signal by audio adaptation unit 1. The different filtering curves or profiles may e.g. be adapted for different degrees of typical impaired hearing by age or noise exposure. In one embodiment, the terminal 10 includes a media player and recorder 27 capable of recording either an audio signal as received by transceiver unit 23, or by microphone 13. Typically, the recorded signal is a speech signal, which is the type of audio most frequently used, at least through speaker 14. However, for external speakers 16, 17, 21, the recorded audio may e.g. be music. A recorded audio signal can then be played back with any one of the preset filtering curves, whereby the user may indicate by input on keyboard 11 which of these filtering curves gives best intelligibility. The filtering curve for which a confirmation signal is input to indicate preference, is thereafter set as a standard filter setting for audio adaptation unit 1 by control unit 20, for the audio output in question, and that filtering curve is stored or flagged as such in memory 29. The filtering curve may, as indicated above, be a setting of a number of frequency selective filter channels, or a setting of one or a plurality of broadband filters to be applied. As an alternative, media player 27 need not having recording capabilities, it may simply be capable of playing audio stored as audio files in memory 28, such as mp3 files. As yet another alternative, different filtering curves may be tried out on a live audio signal, such as on the received audio signals of an ongoing speech conversation with a remote party over the radio communications network 30, or a received streaming audio signal.

Further embodiments may be realized based on the foregoing invention as described. For instance, by storing audiometry results obtained at different times the user can be informed when significant changes have occurred, which can indicate that the user has been exposed to too high sound levels and should take precautions to avoid further degrading of the hearing.

Preferably, the audiometry test is performed separately for each ear when stereo headsets, wired or wireless, are used as acoustic interface. When connected to stereo loudspeakers a separate audiometry test should be done for each channel as well, but here the difference is caused by the influence of the acoustic listening environment on each speaker, including distance and location of reflecting surfaces and their absorption characteristics. For a person with impaired hearing the filters when using loudspeakers will compensate for both hearing impairment as well as influence of acoustic environment. For a normal hearing person the filters will compensate for the influence of the acoustic environment. Typical situations where the effect of the acoustic environment is apparent are a room with carpets curtains and soft padded furniture compared to a bare concrete room.

The principles of the present invention have been described in the foregoing by examples of embodiments or modes of operations. However, the invention should not be construed as being limited to the particular embodiments discussed above. For instance, an indication of perceived or preferred audio signals need not be input by means of a real key of keyboard 11. Alternatively, voice commands may be used, which are interpreted by means of a speech recognition system of terminal 10. Furthermore, sound signals generated as tones by signal generator 26 as well as filters of audio adaptation unit 1 may be digital or analog.

The above described more or less specific embodiments should therefore be regarded as illustrative rather than restrictive, and it should be appreciated that variations may be made in those embodiments by persons skilled in the art, without departing from the scope of the present invention as defined by the appended claims.

## Claims

1. A radio communication terminal, comprising:
an audio signal output configured to provide sound to a user;
an audio adaptation unit configured to assign predetermined audio characteristics to an audio signal, connected to the audio signal output;
an audio signal generator configured to generate audio signals at different frequencies and amplitude levels, wherein the audio signal generator is configured to run an audiometric sequence through the audio output,
a user input interface connected to the audio adaptation unit, operable to set audio characteristics for subsequently provided audio signals;
wherein the audio adaptation unit comprises a frequency-selective filter comprising a plurality of channels for different audio frequencies, each channel having a filter coefficient configured to affect an audio signal amplitude for the respective frequency, and
a control unit configured to set the filter coefficients of the frequency-selective filter responsive to input on the user input interface.

2. The radio communication terminal of claim 1, wherein the user input interface is operable to input a command indicating that a user has heard an output audio signal.

3. The radio communication terminal of claim 1, wherein the audio adaptation unit comprises a filter switch, selectively configurable to pass an audio signal to one or more of a plurality of filters, where each filter is configured to affect an audio signal amplitude according to a predetermined frequency profile.

4. The radio communication terminal of claim6, comprising:
a control unit configured to set the filter switch responsive to input on the user input interface.

5. The radio communication terminal of claim 1, wherein the audio adaptation unit comprises a filter configurable to filter an audio signal with different filtering curves over an audio frequency range, further comprising:
a memory for holding a plurality of different filtering curves, and
a control unit configured to control the filter to apply a selected one of said filtering curves from the memory as indicated by input on the user input interface.

6. The radio communication terminal of claim8, comprising:
a media player connected to the audio output through the filter; and
an audio memory for holding an audio file connected to the media player.

7. The radio communication terminal of claim9, wherein the media player is connected to an audio input, and is also operable as a media recorder to record an audio signal as an audio file in the audio memory.

8. The radio communication terminal of claim 1, comprising:
a radio signal transceiver for remote receiving a radio signal, including a signal decoder configured to extract an audio signal from a received radio signal, connected to the audio signal output through the audio adaptation unit.

9. The radio communication terminal of claim 1, wherein the audio signal output comprises a speaker.

10. The radio communication terminal of claim 1, wherein the audio signal output comprises a connector for attachment of an external speaker.

11. The radio communication terminal of claim 1, wherein the audio signal output comprises a short range wireless signal transmitter for communicative connection to an external speaker.

12. The radio communication terminal of claim 1, wherein the user input interface comprises a keyboard, and wherein the audio adaptation unit is configured to interpret input of one of the keys of the keyboard as a confirmation signal that the provided sound has been perceived by the user.

13. A method for adjusting audio characteristics of a radio communication terminal, comprising the steps of:
repeatedly passing audio signals with different audio characteristics through an audio signal output of the terminal to provide sound to a user;
detecting a user input responsive to the provided sound;
setting audio characteristics to be used for subsequently passed audio signals responsive to the user input; and wherein the steps of repeatedly passing audio signals and detecting user input involves an audiometric sequence, the method including the steps of:
passing audio signals at different frequencies and amplitude levels;
monitoring, for each frequency and amplitude level, user input indicating that the user has perceived the provided sound;
comparing perceived amplitude levels with reference levels; and
selectively adjusting a frequency-selective filter for subsequently passed audio signals.

14. The method of claim 16, wherein the terminal includes a frequency-selective filter with a plurality of channels for different audio frequencies having separate filter coefficients, and a memory for holding a plurality of different settings for the frequency-selective filter, wherein the step of repeatedly passing the audio signals with different audio characteristics includes:
passing the audio signals through the filter configured according to the different settings; and wherein the step of setting audio characteristics to be used includes
subsequently using the setting indicated as preferred by means of the user input.

15. The method of claim 17, comprising the step of:
playing an audio file repeatedly by means of a media player connected to the audio output through the frequency-selective filter configured in accordance with the different settings.

16. The method of claim 18, comprising the step of:
creating the audio file to be played by recording an audio signal by means of a microphone.

17. The method of claim 16, wherein the step of passing the audio signal to the audio signal output of the terminal to provide sound to a user comprises
passing the audio signal to a speaker of the terminal.

18. The method of claim 16, wherein the step of passing the audio signal to the audio signal output of the terminal to provide sound to a user comprises
passing the audio signal to an external speaker connected to the terminal.

19. The method of claim 16, wherein the step of passing the audio signal to the audio signal output of the terminal to provide sound to a user comprises:
passing the audio signal to an external speaker by means of a short range wireless signal transmitter of the terminal.

## Patentansprüche

1. Funkkommunikations-Endgerät, umfassend:
ein Audiosignalausgang, der konfiguriert ist, um einem Benutzer Ton zur Verfügung zu stellen;
eine Audio-Anpassungseinheit, die konfiguriert ist, um vorbestimmte Audio-Eigenschaften einem Audiosignal zuzuweisen, verbunden mit dem Audiosignalausgang;
einen Audiosignalerzeuger, der konfiguriert ist, um Signale unterschiedlicher Frequenzen und Amplitudenhöhen zu erzeugen, wobei der Audiosignalerzeuger konfiguriert ist, um eine audiometrische Sequenz durch den Audioausgang zu leiten,
eine Benutzer-Eingabeschnittstelle, die mit der Audio-Anpassungseinheit verbunden ist, die betreibbar ist, um Audio-Eigenschaften für sequentiell zur Verfügung gestellte Audiosignale einzustellen;
wobei die Audio-Anpassungseinheit ein Frequenz-selektives Filter umfasst, das eine Vielzahl von Kanälen für unterschiedliche Audiofrequenzen umfasst, wobei jeder Kanal einen Filterkoeffizienten aufweist, der konfiguriert ist, um eine Audiosignalamplitude für die entsprechende Frequenz zu beeinflussen, und
eine Steuereinheit, die konfiguriert ist, um die Filterkoeffizienten des Frequenz-selektiven Filters einzustellen, ansprechbar auf Eingaben an der Benutzer-Eingabeschnittstelle.

2. Funkkommunikationsgerät nach Anspruch 1, wobei die Benutzer-Eingabeschnittstelle betreibbar ist, um einen Befehl einzugeben, der anzeigt, dass ein Benutzer ein Ausgangs-Audiosignal gehört hat.

3. Funkkommunikationsgerät nach Anspruch 1, wobei die Audio-Anpassungseinheit einen Filterumschalter umfasst, der wahlweise konfigurierbar ist, um ein Audiosignal zu einem oder einer Vielzahl von Filtern weiterzuleiten,
wobei jedes Filter konfiguriert ist, um eine Audiosignal-Amplitude in Übereinstimmung mit einem vorbestimmten Frequenzprofil zu beeinflussen.

4. Funkkommunikations-Endgerät nach Anspruch 6, umfassend:
eine Steuereinheit, die konfiguriert ist, um den Filterumschalter ansprechbar auf eine Eingabe an der Benutzer-Eingabeschnittstelle einzustellen.

5. Funkkommunikations-Endgerät nach Anspruch 1, wobei die Funkanpassungseinheit ein Filter umfasst, das konfigurierbar ist, um ein Audiosignal mit verschiedenen Filterungskurven über einem Audio-Frequenzbereich zu filtern, ferner umfassend:
einen Speicher zum Halten einer Vielzahl von verschiedenen Filterungskurven, und
eine Steuereinheit, die konfiguriert ist, um das Filter zu steuern, um eine ausgewählte der Filterungskurven aus dem Speicher, wie durch Eingabe an der Benutzer-Eingabeschnittstelle angegeben, anzuwenden.

6. Funkkommunikations-Endgerät nach Anspruch 8, umfassend:
einen Mediaplayer, der mit dem Audioausgang durch das Filter verbunden ist; und
einen Audiospeicher zum Halten einer Audiodatei, der mit dem Mediaplayer verbunden ist.

7. Funkkommunikations-Endgerät nach Anspruch 9, wobei der Mediaplayer mit einem Audio-Eingang verbunden ist, und auch als Media-Rekorder betreibbar ist, um ein Audiosignal als Audiodatei in dem Audiospeicher aufzunehmen.

8. Funkkommunikations-Endgerät nach Anspruch 1, umfassend:
einen Funksignal-Sendeempfänger zum Fernempfangen des Audiosignals, der einen Signaldekoder beinhaltet, der konfiguriert ist, um ein Audiosignal aus einem empfangenen Funksignal zu extrahieren, verbunden mit dem Audio-Signalausgang durch die Audio-Anpassungseinheit.

9. Funkkommunikations-Endgerät nach Anspruch 1, wobei der Audiosignalausgang einen Lautsprecher umfasst.

10. Funkkommunikations-Endgerät nach Anspruch 1, wobei der Audiosignalausgang einen Verbinder zum Anbringen eines externen Lautsprechers umfasst.

11. Funkkommunikations-Endgerät nach Anspruch 1, wobei der Audiosignalausgang einen Kurzstrecken-Drahtlossignalsender zum kommunikativen Verbinden zu einem externen Lautsprecher umfasst.

12. Funkkommunikations-Endgerät nach Anspruch 1, wobei die Benutzer-Eingabeschnittstelle eine Tastatur umfasst, und
wobei die Audio-Anpassungseinheit konfiguriert ist, um eine Eingabe von einer der Tasten der Tastatur als ein Bestätigungssignal, dass der zur Verfügung gestellte Ton vom Benutzer bemerkt wurde, zu interpretieren.

13. Verfahren zum Anpassen von Audio-Eigenschaften eines Funkkommunikations-Endgeräts, die Schritte umfassend:
wiederholtes Führen von Audiosignalen mit unterschiedlichen Audio-Eigenschaften durch einen Audiosignalausgang des Endgeräts, um Ton einem Benutzer zur Verfügung zu stellen;
Erfassen einer Benutzereingabe, ansprechbar auf zur Verfügung gestellten Ton;
Einstellen von zu verwendenden Audio-Eigenschaften für sequentiell durchgeführte Audiosignale, ansprechbar auf die Benutzereingabe; und wobei der Schritt des wiederholten Durchführens von Audiosignalen und Erfassen einer Benutzereingabe eine audiometrische Sequenz einschließt, und wobei das Verfahren die Schritte beinhaltet:
Durchführen von Audiosignalen von unterschiedlichen Frequenzen und Amplitudenhöhen;
Überwachen, für jede Frequenz und Amplitudenhöhe, einer Benutzereingabe, die angibt, dass der Benutzer den zur Verfügung gestellten Ton bemerkt hat;
Vergleichen bemerkter Amplitudenhöhen mit Referenzhöhen; und
wahlweise Einstellen eines Frequenz-selektiven Filters für sequentiell durchgeleitete Audiosignale.

14. Verfahren nach Anspruch 16, wobei das Gerät ein Frequenz-selektives Filter mit einer Vielzahl von Kanälen für unterschiedliche Audiofrequenzen mit getrennten Filterkoeffizienten, und einen Speicher zum Halten einer Vielzahl von unterschiedlichen Einstellungen für das Frequenz-selektive Filter beinhaltet, wobei der Schritt des wiederholten Durchleitens der Audiosignale mit unterschiedlichen Audio-Eigenschaften beinhaltet:
Durchleiten der Audiosignale durch das Filter, das in Übereinstimmung mit den unterschiedlichen Einstellungen konfiguriert ist; und wobei der Schritt des Einstellens der zu verwendenden Audio-Eigenschaften beinhaltet
sequentiell Verwenden der Einstellung, die mittels der Benutzereingabe als bevorzugt angegeben werden.

15. Verfahren nach Anspruch 17, die Schritte umfassend:
wiederholtes Abspielen einer Audiodatei mittels eines Mediaplayers, der mit dem Audio-Ausgang durch das Frequenz-selektive Filter verbunden ist, das in Übereinstimmung mit den unterschiedlichen Einstellungen konfiguriert ist.

16. Verfahren nach Anspruch 18, die Schritte umfassend:
Erzeugen der abzuspielenden Audiodatei durch Aufnehmen eines Audiosignals mittels eines Mikrofons.

17. Verfahren nach Anspruch 16, wobei der Schritt des Durchleitens eines Audiosignals zu dem Audiosignalausgang des Endgeräts, um Ton einem Benutzer zur Verfügung zu stellen, umfasst:
Durchleiten eines Audiosignals zu einem Lautsprecher des Endgeräts.

18. Verfahren nach Anspruch 16, wobei der Schritt des Durchleitens des Audiosignals zu dem Audiosignal-Ausgang des Endgeräts, um Ton einem Benutzer zur Verfügung zu stellen, umfasst:
Durchleiten des Audiosignals zu einem externen Lautsprecher, der mit dem Endgerät verbunden ist.

19. Verfahren nach Anspruch 16, wobei der Schritt des Durchleitens des Audiosignals zu dem Audiosignalausgang des Endgeräts, um Ton einem Benutzer zur Verfügung zu stellen, umfasst:
Durchleiten des Audiosignals zu einem externen Lautsprecher mittels eines Kurzstrecken-Drahtlossenders des Endgeräts.

## Revendications

1. Terminal de communication radio, comprenant :
une sortie de signal audio, configurée pour fournir du son à un utilisateur ;
une unité d'adaptation audio, configurée pour attribuer des caractéristiques audio prédéterminées à un signal audio, connectée à la sortie de signal audio ;
un générateur de signaux audio, configuré pour produire des signaux audio à différentes fréquences et différents niveaux d'amplitude, dans lequel le générateur de signaux audio est configuré pour envoyer une séquence audiométrique sur la sortie audio ;
une interface de saisie par l'utilisateur, connectée à l'unité d'adaptation audio, en mesure de paramétrer des caractéristiques audio pour des signaux audio fournis ensuite ;
dans lequel l'unité d'adaptation audio comprend un filtre sélectif en fréquence comprenant une pluralité de canaux pour différentes fréquences audio, chaque canal possédant un coefficient de filtrage configuré pour affecter une amplitude de signal audio pour la fréquence respective ; et
une unité de commande, configurée pour paramétrer les coefficients de filtrage du filtre sélectif en fréquence en réponse à une saisie sur l'interface de saisie par l'utilisateur.

2. Terminal de communication radio selon la revendication 1, dans lequel l'interface de saisie par l'utilisateur est en mesure de saisir une instruction indiquant qu'un utilisateur a entendu un signal audio de sortie.

3. Terminal de communication radio selon la revendication 1, dans lequel l'unité d'adaptation audio comprend un commutateur de filtres, configurable pour envoyer sélectivement un signal audio à un ou plusieurs filtres parmi une pluralité de filtres, chaque filtre étant configuré pour affecter une amplitude du signal audio en fonction d'un profil de fréquences prédéterminé.

4. Terminal de communication radio selon la revendication 6, comprenant :
une unité de commande, configurée pour paramétrer le commutateur de filtres en réponse à une saisie sur l'interface de saisie par l'utilisateur.

5. Terminal de communication radio selon la revendication 1, dans lequel l'unité d'adaptation audio comprend un filtre pouvant être configuré pour filtrer un signal audio à l'aide de plusieurs courbes de filtrage sur une plage de fréquences audio, comprenant en outre :
une mémoire destinée à contenir une pluralité de différentes courbes de filtrage ; et
une unité de commande, configurée pour commander au filtre d'appliquer une courbe sélectionnée parmi lesdites courbes de filtrage provenant de la mémoire, d'après une saisie faite sur l'interface de saisie par l'utilisateur.

6. Terminal de communication radio selon la revendication 8, comprenant :
un lecteur multimédia connecté à la sortie audio via le filtre ; et
une mémoire audio destinée à contenir un fichier audio connecté au lecteur multimédia.

7. Terminal de communication radio selon la revendication 9, dans lequel le lecteur multimédia est connecté à une entrée audio et est également utilisable comme enregistreur multimédia afin d'enregistrer un signal audio sous la forme d'un fichier audio dans la mémoire audio.

8. Terminal de communication radio selon la revendication 1, comprenant :
un émetteur-récepteur de signaux radio, destiné à télérecevoir un signal radio et comprenant un décodeur de signal configuré pour extraire un signal audio d'un signal audio reçu, connecté à la sortie de signal audio via l'unité d'adaptation audio.

9. Terminal de communication radio selon la revendication 1, dans lequel la sortie de signal audio comprend un haut-parleur.

10. Terminal de communication radio selon la revendication 1, dans lequel la sortie de signal audio comprend un connecteur pour le raccordement d'un haut-parleur extérieur.

11. Terminal de communication radio selon la revendication 1, dans lequel la sortie de signal audio comprend un émetteur de signal sans fil à courte portée destiné à établir une connexion de communication avec un haut-parleur extérieur.

12. Terminal de communication radio selon la revendication 1, dans lequel l'unité de saisie par l'utilisateur comprend un clavier et dans lequel l'unité d'adaptation audio est configurée pour interpréter la frappe de l'une des touches du clavier comme un signal de confirmation indiquant que le son fourni a été perçu par l'utilisateur.

13. Procédé de réglage des caractéristiques audio d'un terminal de communication radio, comprenant les étapes consistant à :
envoyer répétitivement des signaux audio ayant des caractéristiques audio différentes sur une sortie de signal audio du terminal afin de fournir du son à un utilisateur ;
détecter une saisie par l'utilisateur en réponse au son fourni ;
paramétrer des caractéristiques audio à utiliser pour des signaux audio envoyés par la suite, en réponse à la saisie de l'utilisateur ; et dans lequel les étapes consistant à envoyer répétitivement des signaux audio et à détecter la saisie par l'utilisateur font intervenir une séquence audiométrique, le procédé comprenant les étapes consistant à :
envoyer des signaux audio à différentes fréquences et à différents niveaux d'amplitude ;
surveiller, pour chaque fréquence et chaque niveau d'amplitude, une saisie de l'utilisateur indiquant que l'utilisateur a perçu le son fourni ;
comparer les niveaux d'amplitude perçus avec des niveaux de référence ; et
ajuster sélectivement un filtre sélectif en fréquence pour des signaux audio envoyés ensuite.

14. Procédé selon la revendication 16, dans lequel le terminal comprend un filtre sélectif en fréquence, avec une pluralité de canaux destinés à différentes fréquences audio ayant des coefficients de filtrage différents, et une mémoire destinée à contenir une pluralité de paramétrages différents pour le filtre sélectif en fréquence, dans lequel l'étape d'envoi répétitif de signaux audio ayant des caractéristiques audio différentes comprend l'étape consistant à :
envoyer les signaux audio dans le filtre configuré d'après les différents paramétrages ; et dans lequel l'étape de paramétrage des caractéristiques audio à utiliser comprend l'étape consistant à :
utiliser ensuite les paramétrages indiqués comme préférés par la saisie par l'utilisateur.

15. Procédé selon la revendication 17, comprenant l'étape consistant à :
reproduire répétitivement un fichier audio à l'aide d'un lecteur multimédia connecté à la sortie audio, via le filtre sélectif en fréquence configuré en fonction des différents paramétrages.

16. Procédé selon la revendication 18, comprenant l'étape consistant à :
créer le fichier audio à reproduire en enregistrant un signal audio à l'aide d'un microphone.

17. Procédé selon la revendication 16, dans lequel l'étape d'envoi du signal audio à la sortie de signal audio du terminal afin de fournir du son à un utilisateur comprend l'étape consistant à :
envoyer le signal audio à un haut-parleur du terminal.

18. Procédé selon la revendication 16, dans lequel l'étape d'envoi du signal audio à la sortie de signal audio du terminal afin de fournir du son à un utilisateur comprend l'étape consistant à :
envoyer le signal audio à un haut-parleur extérieur connecté au terminal.

19. Procédé selon la revendication 16, dans lequel l'étape d'envoi du signal audio à la sortie de signal audio du terminal afin de fournir du son à un utilisateur comprend l'étape consistant à :
envoyer le signal audio à un haut-parleur extérieur à l'aide d'un émetteur de signal sans fil à courte portée du terminal.
